# FASCICULE DE BREVET EUROPEEN

(11) **EP 2 250 694 B1**
(45) Date de publication et mention de la délivrance du brevet: **02.12.2015**
(21) Numéro de dépôt: 08873971.9
(22) Date de dépôt: 18.12.2008
(51) Int. Cl.: H01M 4/92, H01M 8/04, H01M 8/06, H01M 8/10

(54) **METHODE ET DISPOSITIF POUR LIMITER LE VIEILLISSEMENT DES PILES A COMBUSTIBLE A MEMBRANE ECHANGEUSE DE PROTONS**
VERFAHREN UND EINRICHTUNG ZUR BEGRENZUNG DER ALTERUNG VON BRENNSTOFFZELLEN MIT PROTONENAUSTAUSCHMEMBRAN
METHOD AND DEVICE FOR LIMITING THE AGEING OF FUEL CELLS WITH PROTON EXCHANGE MEMBRANE

(30) Priorité: 12.02.2008 FR 0850875
(43) Date de publication de la demande: 17.11.2010
(73) Titulaire: Commissariat à l'Énergie Atomique et aux Énergies Alternatives, 75015 Paris (FR)
(72) Inventeur: FRANCO, Alejandro, 38320 Eybens (FR); LEMAIRE, Olivier, 38490 Les Abrets (FR); ESCRIBANO, Sylvie, 38000 Grenoble (FR)
(74) Mandataire: Cabinet Laurent & Charras
(86) Numéro de dépôt international: PCT/FR2008/052356
(87) Numéro de publication internationale: WO 2009/101305

(56) Documents cités:
- US-A1- 2007 292 743
- US-B1- 6 309 769

## Description

### DOMAINE DE L'INVENTION

La présente invention se situe dans le domaine des piles à combustible à membrane échangeuse de protons (« *Photon Exchange Membrane Fuel Cell »* ou PEMFC).

Elle propose une solution permettant de limiter leur vieillissement prématuré, à la fois par le phénomène de corrosion du support catalytique carbone qui se produit à la cathode, et par la détérioration du matériau électrolyte conducteur protonique présent dans la membrane et dans la couche active catalytique de telles piles.

### ETAT ANTERIEUR DE LA TECHNIQUE

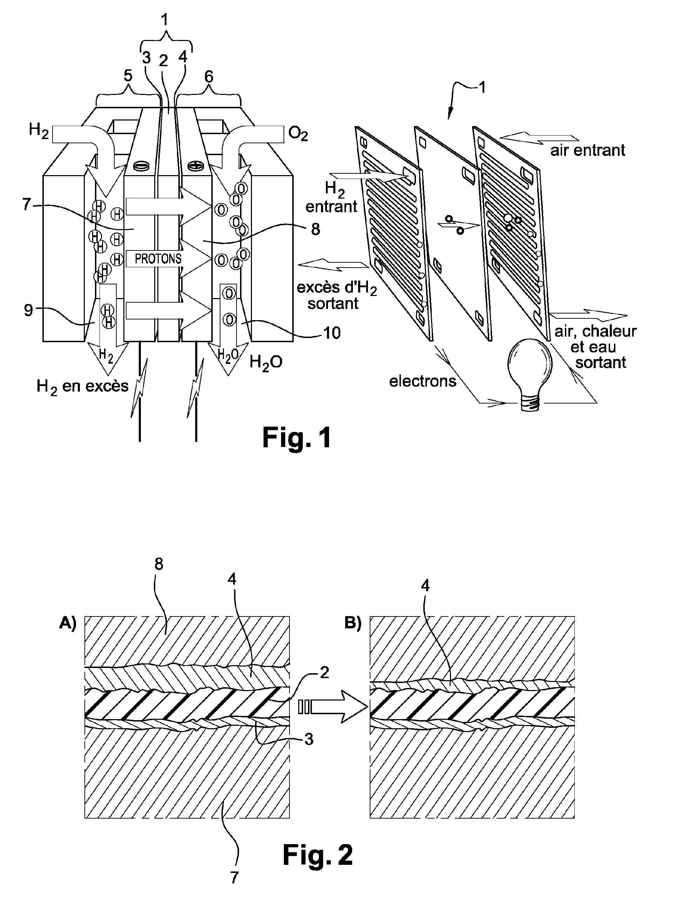

Les PEMFC sont des générateurs de courant dont le principe de fonctionnement, illustré à la figure 1, repose sur la conversion de l'énergie chimique en énergie électrique, par réaction catalytique de l'hydrogène et de l'oxygène.

Les assemblages membrane-électrodes ou AME **1,** appelés communément coeurs de pile, constituent les éléments de base des PEMFC. Ils sont composés d'une membrane polymère **2** et de couches catalytiques **3, 4** présentes d'un côté et de l'autre de la membrane et constituant respectivement l'anode et la cathode. La membrane **2** est réalisée à l'aide d'un polymère conducteur protonique, par exemple du Nafion^{®} (Dupont de Nemours), de l'Hyflon^{®} (Solvay) ou Dow^{®} (Dow Chemical) (marques déposées), qui sont des polymères fluorés.

La membrane **2** permet donc de séparer les compartiments anodique **5** et cathodique **6.** Les couches catalytiques **3, 4** sont généralement constituées de polymères conducteurs protoniques et de nano-particules de platine supportées par des agrégats de carbone. Des couches de diffusion gazeuse **7, 8** (tissu de carbone, feutre...) sont disposées de part et d'autre de l'AME **1** pour assurer la conduction électrique, la répartition homogène des gaz réactifs et l'évacuation de l'eau produite. Un système de canaux **9, 10** placé de chaque côté de l'AME amène les gaz réactifs et évacuent vers l'extérieur l'eau et les gaz en excès.

A l'anode 3, l'oxydation de l'hydrogène sur le catalyseur produit des protons H⁺ et des électrons e⁻. Les protons traversent ensuite la membrane polymère **2** avant de réagir avec l'oxygène à la cathode **4.** La réaction des protons avec l'oxygène à la cathode conduit à la formation d'eau et à la production de chaleur.

L'amélioration de la durée de vie des PEMFC constitue un enjeu majeur pour l'utilisation et le développement des piles pour le marché grand public. C'est pourquoi, la mise en évidence et la compréhension des phénomènes de vieillissement des coeurs de pile sont aujourd'hui essentielles.

Plusieurs phénomènes apparaissent comme étant impliqués dans le vieillissement des piles à combustible.

Tout d'abord, de nombreuses études scientifiques ont montré que le vieillissement des piles à combustible est, entre autres, associé au changement des propriétés nano/microstructurales de la couche active catalytique. Ainsi, J. P. Meyers et R. M. Darling (J. Electrochem. Soc., 153 (8), A1432, 2006) ont rapporté une forte diminution de l'épaisseur de la couche active à la cathode après quelques heures de fonctionnement (Figure 2).

Cette dégradation est due à la corrosion du support catalytique carbone selon la réaction suivante:

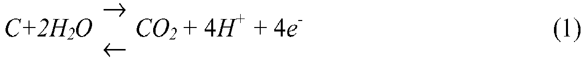

Les mêmes auteurs ont montré que cette dégradation est accentuée lorsque la pile est soumise à des cycles de puissance.

Le potentiel de cette réaction (1) est d'environ 0,2 V/ENH. Etant donné que le potentiel cathodique d'une pile est généralement supérieur à 0,2 V, cette réaction a toujours lieu.

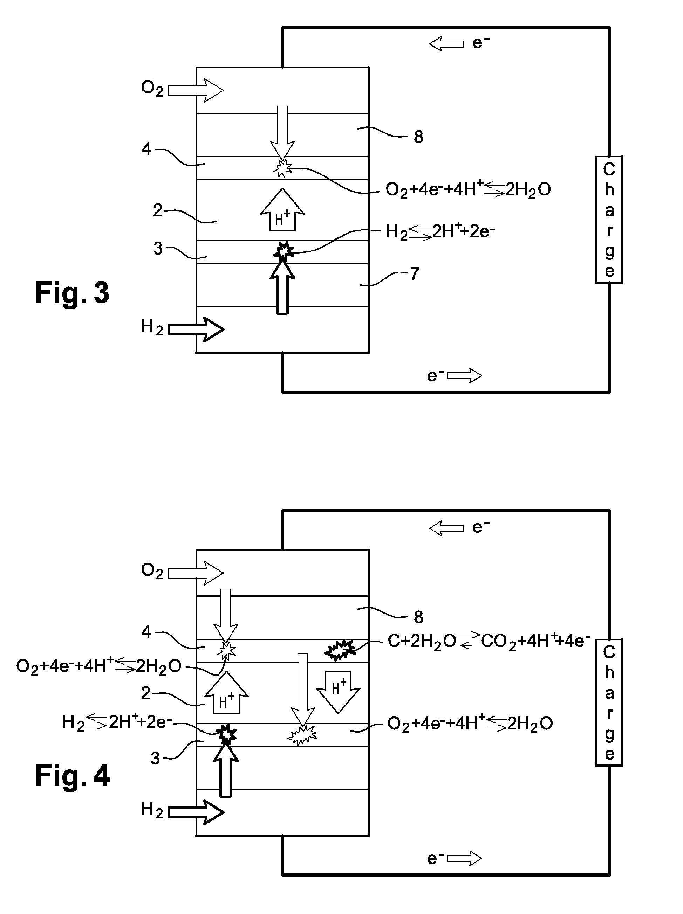

Dans le cas idéal, le fonctionnement d'une PEMFC se caractérise par la présence d'hydrogène servant de combustible à l'anode **3** et d'air/oxygène, constituant le comburant, à la cathode **4.** Ces échanges gazeux sont illustrés à la figure **3****.**

En réalité, pendant le fonctionnement d'une PEMFC, la membrane **2** n'est pas totalement imperméable aux gaz. Par conséquent, une fraction d'oxygène passe de la cathode **4** à l'anode **3.** Ce phénomène est généralement appelé «cross-over». Bien entendu, l'utilisation de membranes fines accentue le phénomène.

L'oxygène présent à l'anode **3** est normalement réduit par l'hydrogène dans le compartiment anodique. Toutefois, lors des phases d'arrêt/démarrage, de cycles de puissance, de la formation des bouchons d'eau, de l'arrêt de l'alimentation d'hydrogène, l'hydrogène n'est pas suffisant pour atteindre l'oxygène. Lors de ces phases, l'oxygène encore présent a recourt à d'autres sources de protons et, en particulier, ceux produits par l'oxydation du carbone cathodique. L'oxygène présent à l'anode 3 agit donc comme une pompe à protons qui accentue la corrosion du carbone au niveau de la couche catalytique cathodique **4,** et la réaction (1) est alors fortement déplacée vers la droite (cf. Figure 4):

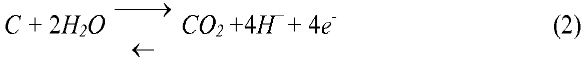

De plus, l'endommagement du support carbone à la cathode induit une perte de surface catalytique et une augmentation de la résistance de contact entre la cathode **4** et la couche de diffusion gazeuse **8.** Ceci participe à la diminution de la durabilité des PEMFC.

Une solution proposée pour supprimer la corrosion du carbone à la cathode consiste à introduire du dioxyde de carbone (CO₂) dans l'air, à la cathode **4,** et à contrôler sa quantité. Cette solution technique, décrite dans le document JP 2006-278190, est illustrée à la figure 5. En introduisant du CO₂, la réaction (1) est déplacée vers la gauche et la consommation/corrosion du carbone est donc ralentie :

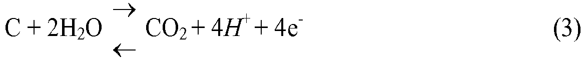

Des approches alternatives pour surmonter le problème de la corrosion du carbone à la cathode ont été proposées. Elles concernent notamment l'utilisation de supports de carbone plus résistants, tels que décrits par exemple dans le document de T. R. Ralph et al. (ECS Transactions 1(8) 2006, 67-84).

En revanche, les documents US 6 309 769 et US 2007/292743 ont pour objectif de piéger le monoxyde de carbone (CO) qui peut être présent en traces dans le carburant ou combustible, soit en l'absorbant dans une couche de ruthénium, soit en le transformant en CO₂ par oxydation par l'eau.

A noter que toutes ces solutions se concentrent sur des interventions au niveau de la cathode uniquement.

Par ailleurs, d'autres études ont révélé que le vieillissement des piles à combustible était associé à la dégradation de l'électrolyte conducteur protonique, largement présent dans la membrane **2** et dans la couche active catalytique **3, 4** (Schmittinger et Vahidi, J. Power Sources, 180, pp 1-14, 2008).

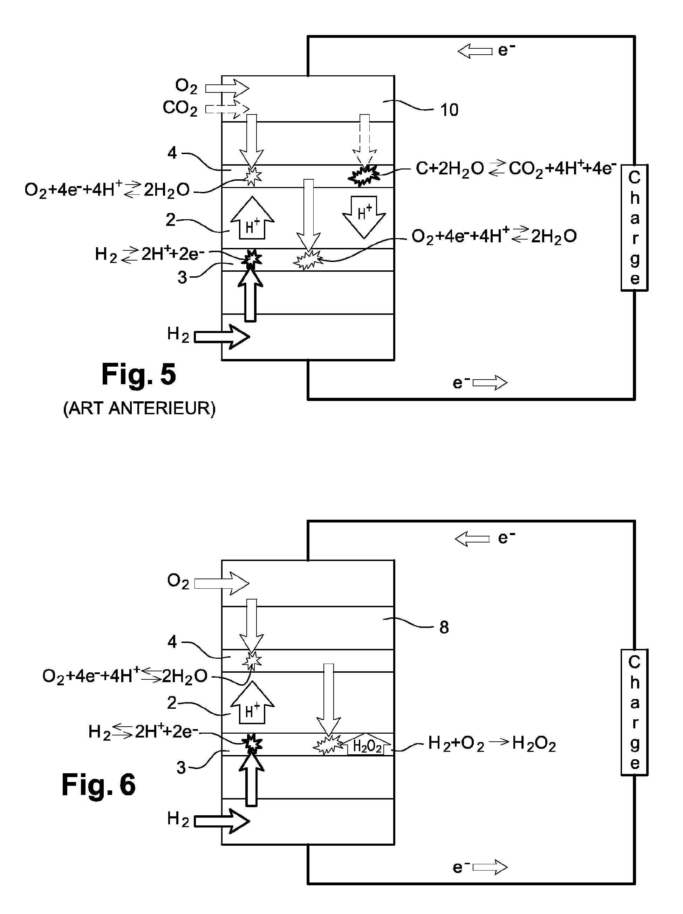

Ainsi, comme illustré à la figure 6, il a été notamment identifié que la formation de peroxyde d'hydrogène H₂O₂ et des radicaux hydroperoxyles au sein de la pile est une des principales causes de dégradation de l'électrolyte (Ohma et al, J. Power Sources, 182, pp 39-47, 2008 ; Mittal et al., J. of The Electrochemical Society, 154(7), B652, 2007). Cependant, d'autres réactions chimiques peuvent aussi dégrader ces polymères.

Ces composés sont produits par les réactions suivantes ayant lieu sur la surface du catalyseur anodique :

*H₂* + *2M → 2(H-M)* (4)

*(H-M)* + *O₂* + *2M → (H-M)* + *2OM → HO₂ - M* + *M* (5)

*(HO₂ - M)* + *(H- M) → H₂O₂* + *2M* *(6)*

M représentant un site sur le catalyseur.

L'équation (4) correspond à la première étape de réaction d'oxydation d'hydrogène à l'anode. Même en absence d'un courant électrique, cette réaction d'adsorption d'hydrogène a lieu.

L'équation (5) correspond à la réaction de l'hydrogène adsorbé avec l'oxygène provenant notamment de la cathode par « cross-over » à travers la membrane, pour former le radical hydroperoxyle adsorbé sur le catalyseur M. Lorsque la pile est en circuit ouvert, le « cross-over » d'oxygène est maximal, la production de peroxyde d'hydrogène accentuée et donc le vieillissement particulièrement important dans ces conditions.

L'équation (6) représente la formation de peroxyde d'hydrogène H₂O₂ par réaction de HO₂ et H adsorbés.

En résumé, la dégradation de la membrane et/ou de l'ionomère présent dans les électrodes est induite en particulier par le peroxyde d'hydrogène produit à l'anode **3** à travers une réaction chimique sur des sites locaux (M) entre l'hydrogène anodique et une partie de l'oxygène venant de la cathode par « cross-over ». Une autre partie de l'oxygène ne réagit pas avec l'hydrogène mais induit une réaction de réduction d'oxygène anodique qui accélère l'effet de pompe à protons et la corrosion du carbone cathodique, comme décrit ci-dessus.

En pratique et dans ce cas, le peroxyde d'hydrogène s'attaque aux chaînes carbonées et aux sites chimiques permettant la conduction des protons, présents par exemple dans l'Hyflon^{®} Ion/Dow (polymères à chaînes courtes) ou le Nafion^{®} (polymère à chaînes longues) dont les structures polymériques sont représentées ci-dessous :

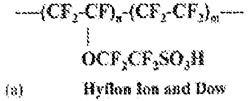

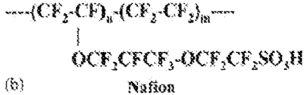

Hommura et al. (J. Electrochem. Soc., 155 (1), A29-A33, 2008) ou Curtin et al. (J. Power Sources, 131 (1/2), pp 41-48, 2004) ont ainsi rapporté des réactions qui illustrent la réactivité d'un polymère conducteur protonique avec le peroxyde d'hydrogène :

*H₂O₂ → 20H°* (7)

*R_{f}- CF₂COOH* + *OH°* → *R_{f}- CF.₂°* + *CO₂* + *H₂O* (8)

*R_{f}- CF₂°* + *OH°* →. *R_{f}- CF₂OH → R_{f}- COF* + *HF* (9)

*R_{f}- COF* + *H₂O → R_{f}- COOH* + *HF* (10)

R_{f} représentant la composition chimique de la matrice polymère.

Des solutions ont déjà été proposées pour limiter la dégradation de la membrane proprement dite, telles que :
- l'incorporation de microparticules d'oxydes métalliques à l'intérieur de la membrane et/ou des électrodes, par exemple des particules du groupe de l'alumine, du dioxyde de titane, de l'oxyde de zirconium, du germanium, du cérium ou toute combinaison de ces matériaux assurant la décomposition du H₂O₂ (WO 2007/108949) ;
- le développement de membranes composites avec des propriétés mécaniques et une stabilité chimique renforcées (voir par exemple WO 2005/045976).

Il existe toutefois un besoin persistant de développer des solutions techniques permettant de limiter le vieillissement des piles à combustibles de type PEMFC.

### EXPOSE DE L'INVENTION

De manière originale, le Demandeur a abordé le problème technique posé sous un tout autre angle puisqu'il propose de le résoudre en agissant au niveau de l'anode.

Ainsi, l'invention repose sur l'ajout, au niveau anodique, d'un composé chimique qui ne soit pas de l'hydrogène mais qui soit capable de réagir avec l'oxygène présent au niveau de l'anode.

Plus précisément, il s'agit d'introduire un composé exogène dont la seule fonction est de « piéger » l'oxygène. Avantageusement, il s'agit d'un gaz qui est injecté volontairement et de manière contrôlée au niveau de l'anode pour assurer la fonction recherchée, à savoir la protection de la pile contre le vieillissement.

Il apparaît clairement qu'il s'agit d'un composé qui ne provient pas du carburant ou combustible. En particulier, il ne s'agit pas d'éventuelles impuretés présentes dans ce carburant ou combustible, en général constitué d'hydrogène.

De manière générale, la présente invention concerne donc un procédé d'amélioration de la durée de vie d'une pile PEMFC comprenant une étape d'introduction, à l'anode, d'un composé chimique apte à réagir avec l'oxygène, selon la revendication 1 ainsi qu' une à pile à combustible selon la revendication 9.

Comme déjà dit, la protection contre le vieillissement repose sur deux mécanismes parallèles :
La consommation, voire l'élimination de l'oxygène à l'anode permet de limiter, voire de stopper l'appel aux protons provenant de la cathode via la corrosion du carbone de sa couche catalytique, carbone se présentant par exemple sous forme de noir de carbone ou de nanotubes. La corrosion du carbone cathodique se trouve ainsi limitée et la durée de vie de la pile augmentée.

Ainsi et plus précisément, l'invention concerne un procédé de protection contre la corrosion de la cathode d'une pile PEMFC comprenant une étape d'introduction, à l'anode, d'un composé chimique apte à réagir avec l'oxygène.

Comme déjà dit, la présente invention prend tout son sens lorsque la pile comprend, à la cathode, une couche catalytique à base de carbone, avantageusement sous forme de noir de carbone, qui subit la corrosion en libérant des protons réagissant avec l'oxygène de l'anode.

Selon un mode de réalisation privilégié et étant donnés les échanges gazeux ayant lieu au sein des piles à combustible, le composé chimique introduit se présente à l'état gazeux.

Ledit composé doit présenter la caractéristique essentielle de réagir avec l'oxygène et ainsi de consommer l'oxygène présent à l'anode.

Avantageusement, le gaz est choisi parmi le monoxyde de carbone (CO) et le dioxyde de carbone (CO₂).

Le fait que ce réactif soit sous forme de gaz permet de l'intégrer au flux gazeux d'hydrogène arrivant à l'anode.

L'ajout de CO dans l'hydrogène permet de diminuer la quantité d'oxygène présente à l'anode selon le mécanisme suivant:

*O₂* + *2M → 2(O-M)* (11)

*CO* + *M → (CO - M)* (12)

*(CO - M)* + *(O - M) → CO* + *2M* (13)

*(O - M)* + *2(H - M) → H₂O* + *3M* (14)

où *M* désigne un site sur le catalyseur anodique.
▪ l'équation (11) correspond à la première étape de la réaction de réduction d'oxygène anodique,
▪ l'équation (12) correspond à l'adsorption du CO sur le catalyseur,
▪ l'équation (13) correspond à la réaction d'élimination de l'oxygène adsorbé,
▪ et l'équation (14) représente l'élimination de l'oxygène restant par l'hydrogène monoatomique issu du mécanisme d'oxydation de l'hydrogène anodique (Franco, P. Schott et al., Journal of the Electrochemical Society, 153 (6) Al 053 (2006)).

La quantité de CO introduite doit être à la fois suffisante pour réduire l'oxygène anodique et à la fois très faible pour éviter un empoisonnement trop fort du catalyseur et donc une diminution irréversible de la tension de la pile.

Lorsque la tension de la pile est très élevée, il est possible d'injecter une quantité importante de CO dans l'hydrogène car l'impact dû à l'empoisonnement est faible. Pour des tensions initiales supérieures à 800 mV, ce qui correspond notamment à une pile à combustible à circuit ouvert, il est possible d'injecter plusieurs centaines de ppm de CO.

D'une manière générale, la quantité de CO nécessaire doit être au maximum le double de la quantité d'oxygène traversant la membrane. Cette quantité d'oxygène peut être mesurée expérimentalement et dépend de nombreux facteurs, notamment de la nature de la membrane, de son épaisseur, de sa teneur en eau, de la température...

Il faut bien noter qu'à long terme, l'ajout du CO à l'anode a moins d'impact sur la dégradation des performances que la corrosion du carbone cathodique induite par la pompe à protons, alors que l'empoisonnement par le CO n'est prédominant qu'à court terme.

Une seconde alternative tout à fait adaptée consiste à ajouter du CO₂ dans l'hydrogène.

Dans ce cas de figure, le CO₂ réagit avec l'hydrogène adsorbé sur le catalyseur anodique pour former du CO qui s'adsorbe selon la réaction suivante :

*CO₂* + *2(H -M) → (CO - M)* + *H₂O* + *M* (15)

Le CO adsorbé va alors réagir avec l'oxygène suivant le mécanisme décrit ci-dessus.

Selon l'invention, il apparaît nécessaire que le catalyseur anodique soit compatible avec le composé chimique introduit.

Ainsi et selon un mode de réalisation privilégié, le catalyseur anodique est tolérant au monoxyde de carbone, ce qui est le cas du platine. En effet, il ne faut pas que le composé chimique réagisse avec le catalyseur et bloque ses sites actifs, ce qui limiterait la réaction électrochimique, en particulier l'oxydation de l'hydrogène. Ledit catalyseur anodique est avantageusement un catalyseur bi-métallique, notamment un alliage de platine, par exemple Pt-Sn, Pt-Ru ou Pt-Mo, ou un catalyseur trimétallique tel que Pt-Ru-Mo. On peut aussi utiliser d'autres catalyseurs, comme le carbure de tungstène (CW).

Selon un second aspect, l'invention concerne un procédé de protection contre la dégradation dite chimique, notamment par le peroxyde d'hydrogène (H₂O₂), du polymère conducteur protonique d'une pile PEMFC, comprenant une étape d'introduction, à l'anode, d'un composé chimique apte à réagir avec l'oxygène.

En se référant à l'équation (5) décrite ci-dessus, il apparaît clairement que l'élimination de l'oxygène via l'introduction du composé chimique à l'anode empêche sa réaction avec l'hydrogène et donc la formation du peroxyde d'hydrogène. La dégradation du conducteur protonique se trouve ainsi limitée.

Selon cet aspect de l'invention, le polymère conducteur protonique se trouve dans la membrane électrolyte et dans les couches catalytiques. Il en résulte donc une protection contre la dégradation de la membrane et/ou des couches catalytiques de la pile.

La solution technique est identique à celle présentée ci-dessus ayant pour effet de protéger une cathode carbonée de la corrosion.

Les réactions mises en jeu, en présence notamment du monoxyde de carbone (CO) ou du dioxyde de carbone (CO₂), sont celles décrites aux équations (11) à (14) et (15), respectivement.

Il est à noter qu'il a déjà été décrit le principe visant à alimenter l'anode à l'aide de gaz autres que l'hydrogène. C'est par exemple le cas de l'oxygène qui sert à éliminer, par oxydation, des impuretés, notamment le monoxyde de carbone CO, présentes à l'anode et susceptibles d'empoisonner le catalyseur anodique.

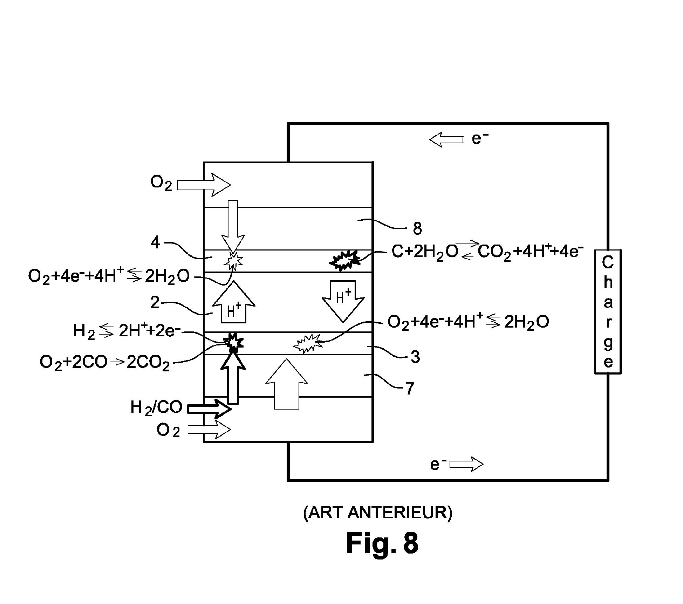

Cette situation est illustrée à la figure 8 et se différencie clairement de la présente invention puisqu'il s'agit de résoudre un problème au niveau de l'anode. En outre, l'apport d'oxygène a pour effet inverse d'accélérer la pompe à protons et donc la corrosion du carbone.

Selon un autre aspect, l'invention concerne également une pile à combustible dotée d'un moyen d'alimentation, à l'anode, d'un composé chimique exogène apte à réagir avec l'oxygène.

Avantageusement, la pile présente les caractéristiques techniques additionnelles suivantes :
- elle possède un catalyseur cathodique contenant du carbone ;
- le composé chimique est avantageusement un gaz, de préférence du monoxyde de carbone ou du dioxyde de carbone. En revanche, il ne s'agit ni d'hydrogène ni d'oxygène. Il ne s'agit pas non plus d'impuretés provenant du combustible ou carburant, tels que le CO ou CO₂ qui peuvent polluer par exemple l'hydrogène ;
- la pile est dotée d'organes de contrôle du débit du moyen d'alimentation. Ainsi, l'anode est alimentée par une quantité avantageusement inférieure ou égale au double de la quantité d'oxygène traversant la membrane de la cathode vers l'anode ;
- l'anode comprend un catalyseur à base de platine, et/ou le catalyseur anodique est bi-métallique, notamment un alliage de platine, par exemple Pt-Sn, Pt-Ru ou Pt-Mo.
- La membrane et/ou les couches catalytiques comprennent un polymère conducteur protonique susceptible d'être dégradé notamment par le peroxyde d'hydrogène (H₂O₂).

Selon un mode de réalisation privilégié, le moyen d'alimentation prend la forme d'un canal. Il peut s'agir du même canal que celui alimentant l'anode en combustible, avantageusement en hydrogène.

### BREVE DESCRIPTION DES FIGURES

La manière dont l'invention peut être réalisée et les avantages qui en découlent ressortiront mieux de l'exemple de réalisation qui suit, donné à titre indicatif et non limitatif, à l'appui des figures annexées parmi lesquelles :
La figure 1 représente le schéma du principe de fonctionnement d'une pile à combustible de type PEMFC.
La figure 2 compare la coupe d'un AME, observée par microscopie, avant utilisation (A) et après plusieurs cycles de fonctionnement (B).
La figure 3 schématise le fonctionnement idéal d'une PEMFC.
La figure 4 schématise le fonctionnement réel d'une PEMFC, entraînant la dégradation de la cathode par la corrosion du carbone.
La figure 5 illustre le principe de l'ajout de CO₂ à la cathode pour éviter la corrosion du carbone à cette électrode, selon l'art antérieur.
La figure 6 schématise le fonctionnement réel d'une PEMFC, entraînant la production de peroxyde d'hydrogène H₂O₂ et de radicaux hydroperoxyles notamment à l'origine de la dégradation des conducteurs protoniques.
La figure 7 illustre le principe selon la présente invention de l'ajout de CO à l'anode pour éviter la corrosion du carbone à la cathode (A) et pour éviter la dégradation notamment par le peroxyde d'hydrogène H₂O₂ et par les radicaux hydroperoxyles de l'électrolyte (B).
La figure 8 illustre le principe de l'ajout d'O₂ à l'anode pour éliminer le CO dans l'hydrogène, selon l'art antérieur.

### MODES DE REALISATION DE L'INVENTION

On réalise une pile constituée d'un AME 1 de surface active (catalyseur Pt) 2 cm², alimentée en hydrogène et oxygène purs, fonctionnant à 1,5 bar à l'anode (H₂) et à la cathode (O₂), à 80°C, 100% HR.

On applique un cycle de charge marche (45 min)/arrêt (15 mm).

Lorsque la concentration d'oxygène à l'anode **3,** issue du « cross-over », est de l'ordre de 1 ppm, il a été observé qu'on pouvait perdre jusqu'à 50% du support carbone cathodique **4** après environ 1000 heures de fonctionnement.

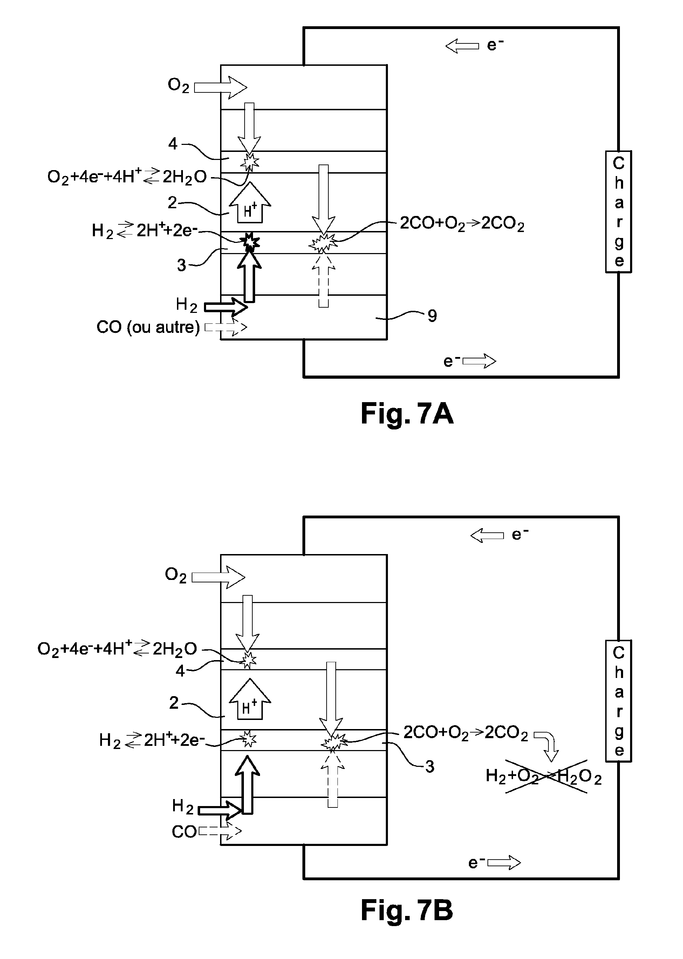

Dans ces conditions, il a été introduit environ 2 ppm de CO à l'anode **3** via les canaux **9** permettant l'alimentation en hydrogène. Les échanges gazeux et réactions ayant lieu dans ces conditions à l'intérieur de la pile PEMFC sont représentés à la figure 7A.

Des mesures ont révélé que la corrosion du carbone cathodique **4** et la dégradation des conducteurs protoniques **(2, 3, 4)** se trouvaient ainsi limitées.

D'une part, la masse perdue de carbone est réduite à environ 30% après 1000 heures de fonctionnement. D'autre part, des analyses par XPS (« X Ray Photoelectron Spectroscopy) ont permis d'observer que la structure du conducteur protonique après 1000 heures de fonctionnement était moins dégradée en présence de CO que sous hydrogène pur.

## Revendications

1. Procédé d'amélioration de la durée de vie d'une pile à combustible de type PEMFC comprenant une étape d'introduction, à l'anode (3), d'un composé chimique autre que l'hydrogène, apte à réagir avec l'oxygène et ne provenant pas du combustible, ledit composé chimique étant un gaz introduit en quantité inférieure ou égale au double de la quantité d'oxygène traversant la membrane de la cathode (4) vers l'anode (3).

2. Procédé selon la revendication 1, ***caractérisé* en ce que** la cathode contient du carbone, le procédé consistant à protéger la cathode (4) carbonée contre la corrosion.

3. Procédé selon la revendication 1, ***caractérisé* en ce que** la pile possède une membrane (2) et/ou des couches catalytiques (3, 4) contenant au moins un polymère conducteur protonique susceptible d'être dégradé chimiquement, le procédé consistant à protéger la membrane (2) et/ou les couches catalytiques (3, 4) contre la dégradation.

4. Procédé selon la revendication 1 ou 2, ***caractérisé* en ce que** la pile possède une couche catalytique (4) à la cathode contenant du carbone, avantageusement du noir de carbone.

5. Procédé selon l'une des revendications 1 à 4, ***caractérisé* en ce que** la pile possède une membrane (2) et/ou des couches catalytiques (3, 4) contenant au moins un polymère conducteur protonique susceptible d'être dégradé chimiquement, notamment par le peroxyde d'hydrogène.

6. Procédé selon l'une des revendications précédentes, ***caractérisé* en ce que** le composé chimique est du monoxyde de carbone (CO) ou du dioxyde de carbone (CO₂).

7. Procédé selon l'une des revendications précédentes, ***caractérisé* en ce que** l'anode (3) comprend un catalyseur à base de platine.

8. Procédé selon l'une des revendications précédentes, ***caractérisé* en ce que** l'anode (3) comprend un catalyseur bimétallique choisi dans le groupe comprenant Pt-Sn, Pt-Ru et Pt-Mo.

9. Pile à combustible de type PEMFC dotée d'un moyen d'alimentation (9), à l'anode (3), d'un composé chimique qui est un gaz autre que l'hydrogène, apte à réagir avec l'oxygène et ne provenant pas du combustible, la quantité dudit gaz étant inférieure ou égale au double de la quantité d'oxygène traversant la membrane de la cathode (4) vers l'anode (3).

10. Pile à combustible selon la revendication 9, ***caractérisée* en ce qu'**elle possède une couche active (4) à la cathode contenant du carbone.

11. Pile à combustible selon la revendication 9 ou 10, ***caractérisée* en ce qu'**elle possède une membrane (2) et/ou des couches catalytiques (3, 4) contenant au moins un polymère conducteur protonique susceptible d'être dégradé chimiquement, notamment par le peroxyde d'hydrogène.

12. Pile à combustible selon l'une des revendications 9 à 11, ***caractérisée* en ce que** le composé chimique est du monoxyde de carbone (CO) ou du dioxyde de carbone (CO₂).

13. Pile à combustible selon l'une des revendications 9 à 12, ***caractérisée* en ce que** la pile est dotée de moyens de contrôle de la quantité de gaz fournie par le moyen d'alimentation (9).

14. Pile à combustible selon l'une des revendications 9 à 13, ***caractérisée* en ce que** l'anode (3) comprend un catalyseur à base de platine.

15. Pile à combustible selon l'une des revendications 9 à 13, ***caractérisée* en ce que** l'anode (3) comprend un catalyseur bimétallique choisi dans le groupe comprenant Pt-Sn, Pt-Ru et Pt-Mo.

## Patentansprüche

1. Verfahren zur Verbesserung der Lebensdauer einer Brennstoffzelle des Typs PEMFC, einen Schritt des Einbringens, und zwar in die Anode (3), einer anderen chemischen Verbindung als Wasserstoff umfassend, die mit Sauerstoff reagieren kann und nicht vom Brennstoff stammt, wobei die chemische Verbindung ein Gas ist, das in einer Menge eingebracht wird, die geringer als das oder gleich dem Zweifache/n der Sauerstoffmenge ist, welche die Membran von der Kathode (4) zur Anode (3) durchquert.

2. Verfahren nach Anspruch 1, **dadurch gekennzeichnet, dass** die Kathode Kohlenstoff enthält, wobei das Verfahren darin besteht, die kohlenstoffhaltige Kathode (4) gegen Korrosion zu schützen.

3. Verfahren nach Anspruch 1, **dadurch gekennzeichnet, dass** die Zelle eine Membran (2) und/oder katalytische Schichten (3, 4) besitzt, die mindestens ein Protonen leitendes Polymer enthalten, das chemisch abgebaut werden kann, wobei das Verfahren darin besteht, die Membran (2) und/oder die katalytischen Schichten (3, 4) vor dem Abbau zu schützen.

4. Verfahren nach Anspruch 1 oder 2, **dadurch gekennzeichnet, dass** die Zelle eine katalytische Schicht (4) an der Kathode besitzt, die Kohlenstoff, vorteilhafter Weise Rußschwarz enthält.

5. Verfahren nach einem der Ansprüche 1 bis 4, **dadurch gekennzeichnet, dass** die Zelle eine Membran (2) und/oder katalytische Schichten (3, 4) besitzt, die mindestens ein Protonen leitendes Polymer enthalten, das vor allem durch Wasserstoffperoxid chemisch abgebaut werden kann.

6. Verfahren nach einem der vorhergehenden Ansprüche, **dadurch gekennzeichnet, dass** die chemische Verbindung Kohlenmonoxid (CO) oder Kohlendioxid (CO₂) ist.

7. Verfahren nach einem der vorhergehenden Ansprüche, **dadurch gekennzeichnet, dass** die Anode (3) einen Katalysator auf Basis von Platin umfasst.

8. Verfahren nach einem der vorhergehenden Ansprüche, **dadurch gekennzeichnet, dass** die Anode (3) einen bimetallischen Katalysator umfasst, der aus der Gruppe ausgewählt ist, die Pt-Sn, Pt-Ru und Pt-Mo umfasst.

9. Brennstoffzelle des Typs PEMFC, die mit einer Einspeisungseinrichtung (9), und zwar in die Anode (3), einer chemischen Verbindung, bei der es sich um ein anderes Gas als Wasserstoff handelt, versehen ist, das mit Sauerstoff reagieren kann und nicht vom Brennstoff stammt, wobei die Menge des Gases geringer als das oder gleich dem Zweifache/n der Sauerstoffmenge ist, welche die Membran von der Kathode (4) zur Anode (3) durchquert.

10. Brennstoffzelle nach Anspruch 9, **dadurch gekennzeichnet, dass** sie eine aktive Schicht (4) an der Kathode besitzt, die Kohlenstoff enthält.

11. Brennstoffzelle nach Anspruch 9 oder 10, **dadurch gekennzeichnet, dass** sie eine Membran (2) und/oder katalytische Schichten (3, 4) besitzt, die mindestens ein Protonen leitendes Polymer enthalten, das vor allem durch Wasserstoffperoxid chemisch abgebaut werden kann.

12. Brennstoffzelle nach einem der Ansprüche 9 bis 11, **dadurch gekennzeichnet, dass** die chemische Verbindung Kohlenmonoxid (CO) oder Kohlendioxid (CO₂) ist.

13. Brennstoffzelle nach einem der Ansprüche 9 bis 12, **dadurch gekennzeichnet, dass** die Brennstoffzelle mit Einrichtungen zur Steuerung der durch die Einspeisungseinrichtung (9) gelieferten Gasmenge versehen ist.

14. Brennstoffzelle nach einem der Ansprüche 9 bis 13, **dadurch gekennzeichnet, dass** die Anode (3) einen Katalysator auf Basis von Platin umfasst.

15. Brennstoffzelle nach einem der Ansprüche 9 bis 13, **dadurch gekennzeichnet, dass** die Anode (3) einen bimetallischen Katalysator umfasst, der aus der Gruppe ausgewählt ist, die Pt-Sn, Pt-Ru und Pt-Mo umfasst.

## Claims

1. A method for extending the lifetime of a PEMFC type fuel cell that includes the step of supplying, at anode (3), a chemical compound, other than hydrogen, capable of reacting with oxygen, but not originating from the fuel, said chemical compound being a gas, the quantity of the gas supplied being equal to or less than twice the quantity of oxygen that passes through the membrane of cathode (4) towards anode (3).

2. The method as claimed in claim 1, **characterized in that** the cathode contains carbon, the method consisting in protecting the carbonated cathode (4) against corrosion.

3. The method as claimed in claim 1, **characterised in that** the fuel cell has a membrane (2) and/or catalyst layers (3, 4) containing at least one proton conductive polymer capable of being chemically degraded, .the method consisting in protecting the membrane (2) and/or the catalyst layers (3, 4) against degradation

4. The method as claimed in claim 1 or 2, **characterised in that** the fuel cell has a catalyst layer (4) on the cathode containing carbon, advantageously black carbon.

5. The method as claimed in claim 1 to 4, **characterised in that** the fuel cell has a membrane (2) and/or catalyst layers (3, 4) containing at least one proton conductive polymer capable of being chemically degraded, namely by hydrogen peroxide.

6. The method as claimed in any of the above claims **characterised in that** the chemical compound is carbon monoxide (CO) or carbon dioxide (CO₂).

7. The method as claimed in any of the above claims,, **characterised in that** the anode (3) comprises a platinum-based catalyst.

8. The method as claimed in any of the above claims, **characterised in that** anode (3) comprises a bimetallic catalyst selected in the group comprising Pt-Sn, Pt-Ru and Pt-Mo.

9. A PEMFC type fuel cell equipped with means of supplying (9), at anode (3), a chemical compound, being a gas other than hydrogen, capable of reacting with oxygen, but not originating from the fuel, the quantity of the gas supplied being equal to or less than twice the quantity of oxygen that passes through the membrane of cathode (4) towards anode (3).

10. The fuel cell as claimed in claim 9, **characterised in that** it has an active layer (4) on the cathode which contains carbon.

11. The fuel cell as claimed in claim 9 or 10, **characterised in that** it has a membrane (2) and/or catalyst layers (3, 4) containing at least one proton conductive polymer capable of being chemically degraded, especially by hydrogen peroxide.

12. The fuel cell as claimed in any of claims 9 to 11, **characterised in that** the chemical compound is carbon monoxide (CO) or carbon dioxide (CO₂).

13. The fuel cell as claimed in any of claims 9 to 12, **characterised in that** the fuel cell is equipped with means of monitoring the quantity of gas supplied by supply means (9).

14. The fuel cell as claimed in any of claims 9 to 13, **characterised in that** anode (3) comprises a platinum-based catalyst.

15. The fuel cell as claimed in any of claims 9 to 13, **characterised in that** anode (3) comprises a bimetallic catalyst selected in the group comprising Pt-Sn, Pt-Ru and Pt-Mo.
